# EUROPEAN PATENT SPECIFICATION

(11) **EP 1 061 815 B1**
(45) Date of publication and mention of the grant of the patent: **04.05.2005**
(21) Application number: 99913170.9
(22) Date of filing: 18.02.1999
(51) Int. Cl.: A23K 1/10, A23K 1/18, A23P 1/08

(54) **CANNED FILLED PET FOOD**
GEFÜLLTES HAUSTIERFUTTER, IN DOSEN ABGEFÜLLT
ALIMENT EN CONSERVE POUR ANIMAUX FAMILIERS

(30) Priority: 12.03.1998 EP 98200791
(43) Date of publication of application: 27.12.2000
(73) Proprietor: Société des Produits Nestlé S.A., 1800 Vevey (CH)
(72) Inventor: DUPONT, Christophe, F-80480 Salouel (FR); DAMBRINE, Marc, F-80470 Ailly sur Somme (FR); SISIAK, Laurent, F-80380 Villers Bretonneux (FR); BAHAUX, Thierry, F-80300 Ville sur Ancre (FR)
(86) International application number: PCT/EP1999/001046
(87) International publication number: WO 1999/045794

(56) References cited:
- EP-A- 0 769 252
- WO-A-98/05219
- AU-A- 7 114 281
- GB-A- 1 327 351
- US-A- 3 922 353
- US-A- 4 900 572

## Description

### Field of the Invention

This invention relates to a canned pet food product which contains two or more portions of different appearance. The invention also relates to a process for producing the canned pet food product.

### Background to the Invention

Canned pet foods are traditionally available in two forms; meat loafs and chunk-type products. The meat loafs are particularly well known. They are usually prepared by comminuting raw meat material and mixing it with water, salt, spices, curing agents, gelling agents and, if necessary, fats to provide a batter. The batter is then heated. The heated batter is then filled into cans to form, after retorting and cooling, a meat loaf.

These meat loaf products are popular because they are easily manufactured, readily digested, very palatable to animals, and are readily formulated to contain necessary nutrients and trace elements. However they are in the form of a uniform, homogeneous mass which lacks the striated and chunky appearance of meat. This may be a disadvantage for pet foods since a meat-like appearance can greatly enhance consumer acceptability.

The chunk-type products overcome this difficulty since they are formulated emulsions which simulate the appearance of meat. One example of these formulated emulsions is described in US patent 4,781,939. The formulated meat emulsion described in this patent is produced by forming a meat-emulsion from a meat source and cereals. The viscous emulsion is then run through a high-speed emulsion mill in which the emulsion is rapidly heated to a temperature in the range of 102°C to 118°C. The emulsion leaving the emulsion mill is fed to a holding tube where the protein in the emulsion coagulates to form a solid emulsion product. This solid emulsion product is then cut into chunks. The chunks are highly striated and resemble natural meat chunks in appearance and texture. Another example of these formulated emulsions is disclosed in US patent 5,132,137. Alternatively, the formulated emulsion may be produced as described in US patent 5,567,466; that is by extruding the viscous emulsion, cooking the extrudate in a tunnel oven, cooling the extrudate, and then dicing the cooled extrudate.

Canned pet food products which are a combination of the meat loafs and the chunk-type products are also known. These products are formed of a matrix of the meat loaf randomly incorporating pieces of formulated emulsion products. Further, canned pet food products which contain layers of different appearance are described in international patent applications WO 98/05218 and 98/05219. However, the products described in these patent applications are not suitable for use in larger cans where the height of the can is at least as large as the diameter of the can.

Therefore there is a need for canned pet food products which have new and interesting appearances to further stimulate consumer interest.

### Summary of the invention

Accordingly, in one aspect, this invention provides a canned pet food product having an upper end and a lower end, the product comprising:
an outer, tubular phase which is substantially solid and which extends from the lower end to the upper end and which includes an edible source of carbohydrate and protein; and
an inner phase which extends from the lower end to the upper end and including an edible source of carbohydrate and protein; the inner phase having an appearance different from the outer phase and extending within the outer phase.

The pet food has the advantage of having an attractive appearance of two or more discrete phases of differing appearances one within the other. Since the phases are substantially discrete, the product does not have the homogeneous appearance of conventional pet foods. Also, the pet food is suitable for larger cans in which the height of the can is at least as large as the diameter of the can.

Preferably the outer phase is a thermally gelled mixture. The outer phase may comprise about 25% to about 75% by volume of the product. The inner phase is preferably a formulated emulsion product which simulates chunks of meat. The inner phase may comprise about 25% to about 75% by volume of the product.

The outer phase and the inner phase preferably each have a moisture content of about 60% to about 85% by weight. It is particularly preferred that the phases each have a moisture content of about 70% to about 85% by weight.

In another aspect, this invention provides a process for producing a canned pet food product, the process comprising:
filling into a can an outer phase including an edible source of carbohydrate and protein;
forming a bore into the outer phase for providing a tubular outer phase;
filling an inner phase including an edible source of carbohydrate and protein into the bore of the tubular outer phase, the inner phase having an appearance different from the outer phase;
sealing the can; and
retorting the sealed can.

Preferably the phases each have a viscosity of about 1500 cp to about 3500 cp when filled into the can.

In a yet further aspect, this invention provides a canned pet food product having at least two discrete phases including a tubular outer phase and an inner phase extending within the outer phase, and produced according to the process defined above.

### Brief Description of the Drawings

Embodiments of the invention are now described, by way of example only, with reference to the drawings in which:
Figure 1 schematically illustrates a first stage in a filling process;
Figure 2 schematically illustrates a second stage in a filling process;
Figure 3 schematically illustrates a can of pet food containing two phases; and
Figure 4 is a cross-section along line A-A' of Figure 3.

### Detailed description of the Invention

The invention is a canned pet food product which is made up of at least two discrete phases including a tubular outer phase and an inner phase extending within the outer phase. At least the outer phase is substantially solid or at least holds its form and each phase includes an edible source of carbohydrate and protein. The pet food product may be used as food for both cats and dogs.

The exact composition of each phase is not critical. The primary requirements of each phase are that the phase is edible; is sufficiently viscous to remain discrete when filled into a can with other phases; and remains substantially discrete during sterilization. The phases should also be such that, when at room temperature, the product holds its form or is substantially solid.

A particularly suitable composition for use as one or more phases is a thermally gelled mixture which sets upon cooling. Thermally gelled mixtures are especially suitable for use as the tubular outer phase. A gelled meat loaf is an especially preferred example of a thermally gelled mixture. The thermally gelled mixture may be prepared by comminuting a suitable meat material to produce a meat batter. The meat material may be any suitable meat source, for example, muscular or skeletal meat, meat by-products, meat meals or a mixture of these sources. The meat source may be of any suitable animal, bird or fish. The exact composition of the meat source may be selected according to cost and the desired flavor. Suitable gelling agents, for example starches and gums such as kappa-carrageenan, locust bean gum, and xanthan gum may be added to the meat batter. Usually no more than about 1% by weight of gum is needed.

Additional ingredients such as sugars, salts, spices, seasonings, flavoring agents, minerals, vitamins, and the like may also be added to the meat batter. The amount of additional ingredients used is preferably such that they make up about 0.25% to about 3% by weight of the meat batter.

Water may also be added the meat batter to provide from about 70% to about 85% by weight of moisture. If sufficient moisture is present in the meat material, water need not be added.

The meat batter is then heated to a temperature suitable to thermally gel the mixture; for example a temperature of about 40°C to about 65°C in a mixer-cooker. Steam may be injected into the meat batter if desired. The heated meat batter may be emulsified if desired. The meat batter is then maintained at a temperature of about 40°C to about 65°C until needed. At this stage, depending upon the canning process, the meat batter preferably has a viscosity in the range of about 1500 to about 3500 centipoise. These viscosities may be obtained by suitably altering the amount or composition of the gum added to the meat batter. After retorting and cooling to room temperature, the meat batter forms a thermally gelled mixture which is substantially solid or at least holds its form.

If all phases of the pet food product are in the form of thermally gelled mixtures, the phases may differ from one another in terms of color. Phases of differing colors may be obtained by including suitable coloring agents into the meat batters. If phases of differing colors are used, coloring agents which are not water soluble, or which are sparingly water soluble, are preferred. Suitable coloring agents include iron oxides and titanium dioxide although any suitable coloring agents may be used. The phases may also differ from one another in terms of texture. Phases of different texture may be obtained by using meat batters having different grinds of meat, gums, or other texturizing agents.

Another suitable phase may be solid food pieces in gravy or gel; especially meat pieces in a gravy or gel. The mixture of solid food pieces in a gravy may be prepared by simply mixing together solid pieces of meat or other material, or both, and a gravy. The meat material may be any suitable meat source as described above. The meat material may be in the form of chunks or may be in the form of flakes. However, if a meat material is used, it is preferred if the solid food pieces are a formulated emulsion product. Solid pieces of other material may also be used; such as rice grains, pasta or noodles, vegetable pieces, and the like.

If a formulated emulsion product, is used, it may be produced by any suitable procedure, for example the procedures described in US patents 4,781,939, 5,132,137 and 5,567,466 and PCT application WO 97/02760; the disclosures of which are incorporated by reference. In these procedures, a meat material is formed into a meat batter; usually by grinding and then emulsifying blocks of the meat material. The meat material conveniently may be in frozen form prior to grinding. The emulsification may be carried out in any suitable equipment.

Usually a protein source is added to the emulsion to improve emulsion stability and binding. The protein source may be a vegetable or animal protein source; for example wheat gluten, soy flour, soy protein concentrates, soy protein isolates, egg proteins, whey, casein, etc. If desired or required, fats may be added to the emulsion. If added, the fats may be any suitable animal fats; for example tallow, or may be vegetable fats. Additional ingredients such as sugars, salts, spices, seasonings, flavoring agents, minerals, vitamins, and the like may also be added to the emulsion.

Water may also be added to provide from about 45% to 80% by weight moisture in the emulsion. If sufficient moisture is present in the meat material, water need not be added.

The emulsion may then be processed in suitable equipment such as an emulsion mill or an extruder.

If an emulsion mill is used, the emulsion is subjected to rapid mechanical heating and shearing. Any suitable emulsion mill may be used, for example the emulsion mill disclosed in US patent 5,132,137. Other suitable emulsion mills are commercially available under the trade name of Trigonal and may be obtained from Siefer Machinenfabrik GmbH & Co KG, Bahnhofstrasse 114, Postfach 101008, Velbert 1, Germany. The temperature of the emulsion is raised to the desired coagulation temperature in the emulsion mill in a few seconds. For example, the temperature may be raised to from about 100°C to about 120°C. The heated emulsion leaving the emulsion mill is then transferred to a holding tube. In the holding tube, the heated emulsion coagulates while moving slowly along the holding tube. The residence time of the heated emulsion in the holding tube is sufficient for the emulsion to have coagulated into a firm emulsion product upon reaching the exit of the holding tube.

If an extruder is used, the emulsion may be forced through an orifice to provide the emulsion with a desired shape; for example of oval, square or rectangular cross-section. The extrudate may then be cooked in a suitable continuous cooking system; for example a tunnel oven using hot air, steam, mixtures of hot air and steam, or microwaves as the heating medium. The core temperature of the extrudate is raised such that the extrudate undergoes thermal gelling. For example, the core temperature may be raised to about 80°C to about 95°C. The gelled extrudate may then be cut into pieces and the pieces cooled to provide a firm emulsion product. The cooling may be carried out by spraying water on the pieces. Alternatively, other cooling media may be used.

The firm emulsion product leaving the holding tube or cooler is then transferred to a cutter where it is cut into chunks of size suitable for use in a pet food. The chunks may be subjected to flaking if desired.

If a gravy is used with the solid food pieces, it may be produced from water, starch or gums and suitable flavoring agents. The gravy preferably comprises about 20% to about 80% by weight of the mixture of solid pieces and gravy. The amount of starch or gum used is preferably sufficient to provide a phase with a viscosity of about 1500 to about 3500 centipoise. Up to about 6% by weight of starch may be used to obtain this viscosity. Suitable gums are kappa-carrageenan, locust bean gum, guar gum and xanthan gum.

If a gel is used with the solid food pieces, it may be produced from a suitable gelling agent, water and suitable flavoring agents. The gel preferably comprises about 20% to about 80% by weight of the mixture of solid pieces and gravy. Suitable gelling agents are proteins such as gelatin; gums such as alginates, kappa-carrageenan, locust bean gum, guar gum and xanthan gum, and the like. The phase preferably has a viscosity of about 1500 cp to about 3500 cp prior to cooling. The gel or aspic may be prepared as is conventional.

As a further alternative, a phase may be in the form of a substantially solid foodstuff of rice or noodles, or both. In this case, the rice or noodles form a substantially solid phase upon cooling. If desired, suitable gelling or thickening agents, for example gums such as kappa-carrageenan, locust bean gum, guar gum and xanthan gum may be added to the rice or noodles. Usually no more than about 1% by weight of gelling or thickening agent is needed. Additional ingredients such as sugars, salts, spices, seasonings, flavoring agents, minerals, vitamins, and the like may also be added to the rice or noodles.

The various phases preferably have similar viscosities immediately prior to filling. The viscosities are preferably within the range of 1500 cp to 3500 cp and within 30% of one another.

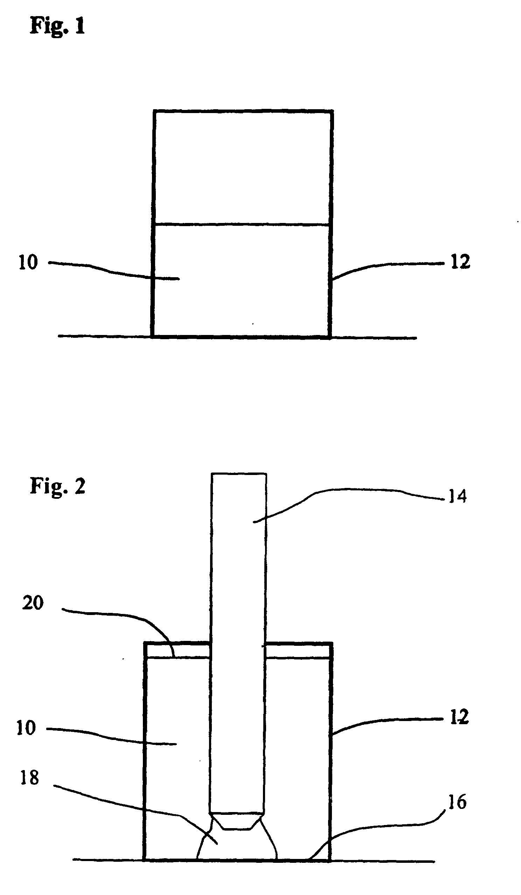

As best illustrated in Figure 1, the outer phase 10 is filled into cans 12 in a suitable filler (not shown). Suitable fillers are commercially available. Sufficient of the outer phase 10 is filled into the can 12 such that, when the inner phase is filled into the can 12, the combined volume of the inner phase and outer phase 10 fills the can 12.

After the outer phase 10 has been filled into the can 12, the can 12 is transported beneath an elongate filling nozzle 14. This is best illustrated in Figure 2. Depending upon the filler used, either the can 12 is raised or the filling nozzle 14 is lowered, such that the filling nozzle 14 extends into the can 12 substantially to the base 16 of the can. The filling nozzle 14 displaces the outer phase 10 from the center of the can 12 and causes it to ride up the sides of the can 12. In this way, the outer phase 10 takes on the shape of a tube within the can 12. Up to this point, the outer phase 10 should be maintained at a temperature or conditions to prevent gelling or setting.

The filling nozzle 14 is then actuated to dispense the inner phase 18 into the can 12. Simultaneously, either the can 12 is lowered or the filling nozzle 14 is raised. In this way, the inner phase 18 is dispensed into the bore of the tube formed by the outer phase 10. Once the filling nozzle 14 reaches the upper surface 20 of the outer phase 10, the filling nozzle is deactivated to terminate the filling. The can 12 is then transported for downstream processing.

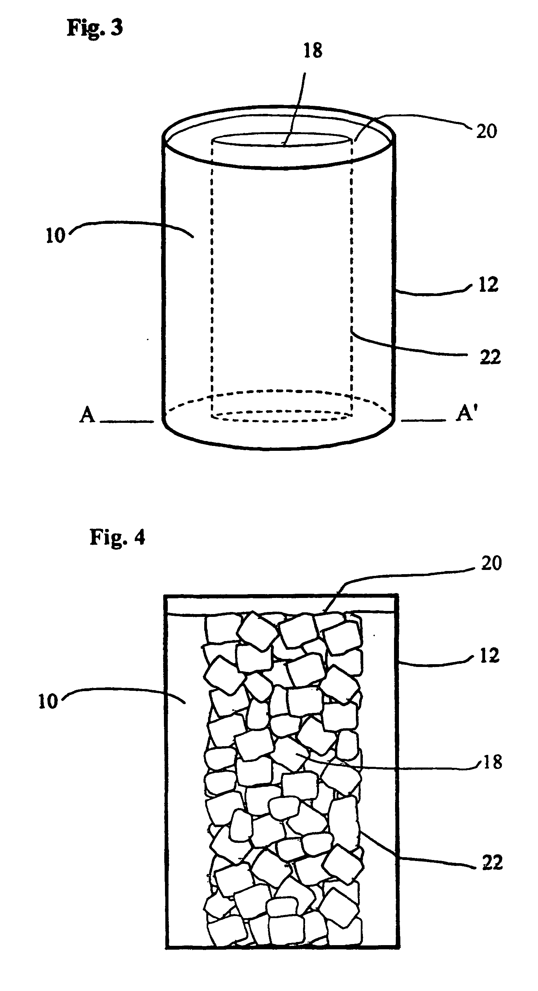

The resulting product is illustrated in Figures 3 and 4. The can 12 contains a tubular outer phase 10 and an inner phase 18 arranged within the bore of the tubular outer phase 10. Due to the viscous nature of the phases 10, 18, a substantially continuous interface 22 forms between the phases 10, 18. The outer phase 10 may form about 25% to about 75% by volume of the product while the inner phase 18 may comprise about 25% to about 75% by volume of the product. Preferably, the inner phase 18 forms about 30% to about 70% by volume of the product. The outer phase 10 and the inner phase 18 preferably each have a moisture content of about 70% to about 85% by weight.

The can 12 is then sealed as is conventional in a suitable seaming apparatus (not shown). The cans are then retorted under conditions sufficient to effect commercial sterilization in the normal manner. Typically the cans are retorted at a temperature of about 115°C to about 135°C for about 30 to 100 minutes.

The cans 12 produced by the process contain a substantially solid, pet food product which comprises a tubular outer phase and an inner phase extending within the outer phase. The product illustrated in Figure 4 is made up of a tubular outer phase 10 which is in the form of a gelled meat loaf while the inner phase 18 is made up of chunks of a formulated emulsion product in a gravy. The phases 10, 18 are clear and distinct and the product is visually attractive once removed from the can 12. Of course, as described above, other inner phases 18 may be used.

The cans 12 used in the process may be any suitable cans of any suitable size. However, the cans 12 are preferably of a size in which the diameter of the can 12 is less than the height of the can 12. For example, the diameter of the cans may be about 73 mm and the height of the cans may be about 110 mm.

It will be appreciated that numerous modifications may be made to the embodiments described above without departing from the scope of the invention. For example, it is not necessary to fill the cans in two steps. Instead the cans may be filled in a single step by using a nozzle which is able to simultaneously dispense into the can two phases, one about the other. Such a nozzle may be formed from a pair of co-axial tubes.

Further, it is not necessary for the inner phase 18 to take on a substantially cylindrical form as illustrated in Figures 3 and 4. For example, the inner phase 18 may take on the form of a truncated cone.

Specific examples are now given by way of further illustration. In the examples, all percentages are by weight unless otherwise stated.

### Example 1

### i) Outer Phase:

A thermally gelled mixture in the form of a meat loaf is prepared from about 53% of a ground meat mixture of poultry carcasses, pig lungs and beef liver, about 2.5% of coloring agents, vitamins and inorganic salts, about 44% of water and steam, about and 0.5% of a gum. The ground meat mixture, coloring agents, vitamins, water and steam are emulsified, mixed and cooked at about 57°C. The salts and gelling agents are then added to the batter.

### ii) Inner Phase

A mixture is prepared from a ground meat mixture of about 73% of poultry carcasses, pig lungs and beef liver, about 16% of wheat flour, about 2% of powdered beef plasma, about 6.8% of water and about 2.2% of coloring agents, vitamins and inorganic salts. The ingredients are emulsified at 12°C in a double grid emulsifier and pumped to a shaping orifice to provide an extrudate having a rectangle cross section of size of about 5 x 10 mm. The extrudate is then cooked in a tunnel oven operated at a temperature of about 100°C for the core temperature of the extrudate to reach a temperature of about 90°C.

The cooked extrudate leaving the tunnel oven is cut into pieces of length of 70 mm. The pieces are then cooled to about 30°C using water. The cooled pieces are cut into cubes of size of about 7 mm to provide chunks of a formulated meat emulsion.

A sauce is prepared from about 98% water, about 1% of coloring agents and about 1% of guar gum. The sauce is combined with the chunks in a weight ratio of about 55:45.

### iii) Filing

The outer phase is filled into tinplated cans of 73 mm diameter and 110mm height in a standard filler. The outer phase provides about 60% of the volume of each can. The cans are then transported beneath a filling nozzle as illustrated in Figure 2. As any can reaches a position beneath the filling nozzle, it is raised such that the filling nozzle extends substantially to the bottom of the can. A piston associated with the nozzle is activated and the inner phase is dispensed into the can along the center axis of the can. As the dispensing continues, the can is lowered away from the filling nozzle such that the inner phase extends along the center axis. Once filled, the inner phase constitutes about 40% of the volume of the can.

The cans are then sealed, seamed, retorted at about 125°C for about 40 minutes and cooled. After cooling, a can is opened and turned out onto a plate. The product has two clearly defined, discrete phases; one within each other. The product has an attractive appearance. The product is cut into two along its center-line and each half retains its shape.

### Example 2

The process of example 1 is repeated except that the inner phase is produced by mixing precooked rice with some water and less than 1% by weight of a gum mixture including locust bean gum, κ-carrageenan and guar gum. The rice mixture is held at about 60°C until filled into the cans.

After cooling, a can is opened and turned out onto a plate. The product has two clearly defined, discrete phases; one within each other. The product has an attractive appearance. The product is cut into two along its center-line and each half retains its shape.

### Example 3

The process of example I is repeated except that the inner phase is produced from flakes of a formulated meat emulsion produced according to US patent US patents 4,781,939 in an aspic solution. The aspic mixture is held at about 60°C until filled into the cans.

After cooling, a can is opened and turned out onto a plate. The product has two clearly defined, discrete phases; one within each other. The product has an attractive appearance. The product is cut into two along its center-line and each half retains its shape.

## Claims

1. A canned pet food product having an upper end and a lower end, the product comprising:
an outer, tubular phase which is substantially solid and which extends from the lower end to the upper end and which includes an edible source of carbohydrate and protein; and
an inner phase which extends from the lower end to the upper end and including an edible source of carbohydrate and protein; the inner phase having an appearance different from the outer phase and extending within the outer phase.

2. A product according to claim 1 in which the outer phase is a thermally gelled mixture.

3. A product according to claim 1 in which the inner phase comprises chunks of a formulated emulsion product in a gravy.

4. A product according to claim 1 in which the outer phase comprises about 25% to about 75% by volume of the product and the inner phase comprises about 25% to about 75% by volume of the product.

5. A product according to claim 1 in which the product has a height at least as large as its diameter.

6. A product according to claim 1 in which the phases each have a moisture content of about 70% to about 85% by weight.

7. A canned pet food product having an upperend and a lower end, the product comprising:
an outer, tubular phase which extends from the lower end to the upper end and which includes a substantially solid, thermally gelled mixture of carbohydrate and protein; and
an inner phase which extends from the lower end to the upper end and which is in the form of chunks of a formulated emulsion product in a gravy; the inner phase having an appearance different from the outer phase and extending within the outer phase.

8. A product according to claim 7 in which the outer phase comprises about 25% to about 75% by volume of the product and the inner phase comprises about 25% to about 75% by volume of the product.

9. A product according to claim 7 in which the product has a height at least as large as its diameter.

10. A product according to claim 7 in which the phases each have a moisture content of about 70% to about 85% by weight.

11. A canned pet food product having an upper end and a lower end, the product comprising:
an outer, tubular phase which is substantially solid and which extends from the lower end to the upper end and which includes an edible source of carbohydrate and protein; and
an inner phase which extends from the lower end to the upper end and including an edible source of carbohydrate and protein; the inner phase having an appearance different from the outer phase;
the product being produced by a process comprising:
filling the outer phase into a can, the outer phase having a viscosity in the range of about 1500 to about 3500 centipoise;
forming a bore into the outer phase for providing a tubular outer phase;
filling the inner phase into the bore of the tubular outer phase;
sealing the can; and
retorting the sealed can.

12. A product according to claim 11 in which the outer phase is a thermally gelled mixture.

13. A product according to claim 11 in which the inner phase comprises chunks of a formulated emulsion product in a gravy.

14. A product according to claim 11 in which the outer phase comprises about 25% to about 75% by volume of the product and the inner phase comprises about 25% to about 75% by volume of the product.

15. A product according to claim 11 in which the product has a height at least as large as its diameter.

16. A product according to claim 11 in which the phases each have a moisture content of about 70% to about 85% by weight.

17. A process for producing a canned pet food product, the process comprising:
filling into a can an outer phase including an edible source of carbohydrate and protein, the outer phase having a viscosity in the range of about 1500 to about 3500 centipoise;
forming a bore into the outer phase for providing a tubular outer phase;
filling an inner phase including an edible source of carbohydrate and protein into the bore of the tubular outer phase, the inner phase having an appearance different from the outer phase;
sealing the can; and
retorting the sealed can.

18. A process according to claim 17 in which the inner phase has a viscosity of about 1500 cp to about 3500 cp when filled into the can.

## Patentansprüche

1. Dosen-Haustierfutterprodukt mit einem oberen Ende und einem unteren Ende, wobei das Produkt umfaßt:
eine äußere, röhrenartige Phase, die im wesentlichen fest ist und die sich vom unteren Ende bis zum oberen Ende erstreckt und eine eßbare Quelle für Kohlenhydrat und Protein einschließt; und
eine innere Phase, die sich vom unteren Ende bis zum oberen Ende erstreckt und eine eßbare Quelle von Kohlenhydrat und Protein einschließt, wobei die innere Phase ein Erscheinungsbild aufweist, das sich von dem der äußeren Phase unterscheidet, und die sich innerhalb der äußeren Phase erstreckt.

2. Produkt nach Anspruch 1, wobei die äußere Phase eine thermischgelierte Mischung ist.

3. Produkt nach Anspruch 1, wobei die innere Phase Brocken eines formulierten Emulsionsprodukt in einer Sauce umfaßt.

4. Produkt nach Anspruch 1, wobei die äußere Phase etwa 25 bis etwa 75 Volumenprozent des Produkts ausmacht und die innere Phase etwa 25 bis etwa 75 Volumenprozent des Produkts ausmacht.

5. Produkt nach Anspruch 1, wobei das Produkt eine Höhe aufweist, die wenigstens so groß ist wie sein Durchmesser.

6. Produkt nach Anspruch 1, wobei die Phasen jeweils einen Feuchtigkeitsgehalt von etwa 70 bis etwa 85 Gewichtsprozent aufweisen.

7. Dosen-Haustierfutterprodukt mit einem oberen Ende und einem unteren Ende, wobei das Produkt umfaßt:
eine äußere röhrenartige Phase, die sich von dem unteren Ende bis zu dem oberen Ende erstreckt und eine im wesentlichen feste, thermisch gelierte Mischung aus Kohlenhydrat und Protein einschließt; und
eine innere Phase, die sich vom unteren Ende bis zum oberen Ende erstreckt und in Form von Brocken eines formulierten Emulsionsprodukts in einer Sauce vorliegt;
wobei die innere Phase ein Erscheinungsbild aufweist, das sich von dem der äußeren Phase unterscheidet und sich innerhalb der äußeren Phase erstreckt.

8. Produkt nach Anspruch 7, wobei die äußere Phase etwa 25 bis etwa 75 Volumenprozent des Produkts ausmacht und die innere Phase etwa 25 bis etwa 75 Volumenprozent des Produkts ausmacht.

9. Produkt nach Anspruch 7, wobei das Produkt eine Höhe aufweist, die wenigstens so groß ist wie sein Durchmesser.

10. Produkt nach Anspruch 7, wobei die Phasen jeweils einen Feuchtigkeitsgehalt von etwa 70 bis etwa 85 Gewichtsprozent aufweist.

11. Dosen-Haustierfutterprodukt mit einem oberen Ende und einem unteren Ende, wobei das Produkt umfaßt:
eine äußere röhrenartige Phase, die im wesentlichen fest ist und die sich von dem unteren Ende bis zu dem oberen Ende erstreckt und eine eßbare Quelle von Kohlenhydrat und Protein einschließt; und
eine innere Phase, die sich vom unteren Ende bis zum oberen Ende erstreckt und eine eßbare Quelle von Kohlenhydrat und Protein einschließt; wobei die innere Phase ein Erscheinungsbild aufweist, das sich von der äußeren Phase unterscheidet;
wobei das Produkt nach einem Verfahren hergestellt wird, das umfaßt:
Einfüllen der äußeren Phase in eine Dose, wobei die äußere Phase eine Viskosität im Bereich von etwa 1500 bis etwa 3500 cP aufweist;
Ausbilden einer Bohrung in der äußeren Phase, um eine röhrenartige äußere Phase zu erhalten;
Einfüllen der inneren Phase in die Bohrung der röhrenartigen äußeren Phase;
Verschließen der Dose; und
Wärmebehandlung der verschlossenen Dose.

12. Produkt nach Anspruch 11, wobei die äußere Phase eine thermisch gelierte Mischung ist.

13. Produkt nach Anspruch 11, wobei die innere Phase Brocken eines formulierten Emulsionsprodukt in einer Sauce umfaßt.

14. Produkt nach Anspruch 11, wobei die äußere Phase etwa 25 bis etwa 75 Volumenprozent des Produkts ausmacht und die innere Phase etwa 25 bis etwa 75 Volumenprozent des Produkts ausmacht.

15. Produkt nach Anspruch 11, wobei das Produkt eine Höhe aufweist, die wenigstens so groß ist wie sein Durchmesser.

16. Produkt nach Anspruch 11, wobei die Phasen jeweils einen Feuchtigkeitsgehalt von etwa 70 bis etwa 85 Gewichtsprozent aufweisen.

17. Verfahren zur Herstellung eines Dosen-Haustierfutterprodukts, wobei das Verfahren umfaßt:
Einfüllen einer äußeren Phase, die eine eßbare Quelle von Kohlenhydrat und Protein einschließt, in eine Dose, wobei die äußere Phase eine Viskosität im Bereich von etwa 1500 bis etwa 3500 cP aufweist;
Ausbilden einer Bohrung in der äußeren Phase, um eine röhrenartige äußere Phase zu erhalten;
Einfüllen einer inneren Phase, die eine eßbare Quelle von Kohlenhydrat und Protein einschließt, in die Bohrung der röhrenartigen äußeren Phase, wobei die innere Phase ein Erscheinungsbild aufweist, das sich von dem der äußeren Phase unterscheidet;
Verschließen der Dose; und
Wärmebehandeln der verschlossenen Dose.

18. Verfahren nach Anspruch 17, wobei die innere Phase beim Einfüllen eine Viskosität von etwa 1500 cP bis etwa 3500 cP aufweist.

## Revendications

1. Produit alimentaire en boîte pour animaux familiers, ayant une extrémité supérieure et une extrémité inférieure, le produit comprenant :
une phase extérieure tubulaire qui est sensiblement solide et qui s'étend de l'extrémité inférieure à l'extrémité supérieure et qui comprend une source comestible de glucide et de protéine ; et
une phase intérieure qui s'étend de l'extrémité inférieure à l'extrémité supérieure et qui comprend une source comestible de glucide et de protéine ; la phase intérieure ayant un aspect différent de la phase extérieure et s'étendant à l'intérieur de la phase extérieure.

2. Produit selon la revendication 1, dans lequel la phase extérieure est un mélange gélifié thermiquement.

3. Produit selon la revendication 1, dans lequel la phase intérieure comprend des morceaux d'un produit formulé en émulsion dans une sauce.

4. Produit selon la revendication 1, dans lequel la phase extérieure constitue environ 25 % à environ 75 % en volume du produit et la phase intérieure constitue environ 25 % à environ 75 % en volume du produit.

5. Produit selon la revendication 1, dans lequel le produit a une hauteur au moins aussi grande que son diamètre.

6. Produit selon la revendication 1, dans lequel les phases ont chacune une teneur en humidité d'environ 70 % à environ 85 % en poids.

7. Produit alimentaire en boîte pour animaux familiers, ayant une extrémité supérieure et une extrémité inférieure, le produit comprenant :
une phase extérieure tubulaire qui s'étend de l'extrémité inférieure à l'extrémité supérieure et qui comprend un mélange gélifié thermiquement, sensiblement solide, de glucide et de protéine ; et
une phase intérieure qui s'étend de l'extrémité inférieure à l'extrémité supérieure et qui est sous la forme de morceaux d'un produit formulé en émulsion dans une sauce ; la phase intérieure ayant un aspect différent de la phase extérieure et s'étendant à l'intérieur de la phase extérieure.

8. Produit selon la revendication 7, dans lequel la phase extérieure constitue environ 25 % à environ 75 % en volume du produit et la phase intérieure constitue environ 25 % à environ 75 % en volume du produit.

9. Produit selon la revendication 7, dans lequel le produit a une hauteur au moins aussi grande que son diamètre.

10. Produit selon la revendication 7, dans lequel les phases ont chacune une teneur en humidité d'environ 70 % à environ 85 % en poids.

11. Produit alimentaire en boîte pour animaux familiers, ayant une extrémité supérieure et une extrémité inférieure, le produit comprenant :
une phase extérieure tubulaire qui est sensiblement solide et qui s'étend de l'extrémité inférieure à l'extrémité supérieure et qui comprend une source comestible de glucide et de protéine ; et
une phase intérieure qui s'étend de l'extrémité inférieure à l'extrémité supérieure et qui comprend une source comestible de glucide et de protéine ; la phase intérieure ayant un aspect différent de la phase extérieure ;
le produit étant produit par un procédé comprenant les étapes consistant à :
remplir une boîte de conserve en y introduisant la phase extérieure, la phase extérieure ayant une viscosité dans l'intervalle d'environ 1500 à environ 3500 centipoises ;
former un trou dans la phase extérieure pour obtenir une phase extérieure tubulaire ;
remplir le trou de la phase extérieure tubulaire en y introduisant la phase intérieure ;
sceller la boîte ; et
autoclaver la boîte scellée.

12. Produit selon la revendication 11, dans lequel la phase extérieure est un mélange gélifié thermiquement.

13. Produit selon la revendication 11, dans lequel la phase intérieure comprend des morceaux d'un produit formulé en émulsion dans une sauce.

14. Produit selon la revendication 11, dans lequel la phase extérieure constitue environ 25 % à environ 75 % en volume du produit et la phase intérieure constitue environ 25 % à environ 75 % en volume du produit.

15. Produit selon la revendication 11, dans lequel le produit a une hauteur au moins aussi grande que son diamètre.

16. Produit selon la revendication 11, dans lequel les phases ont chacune une teneur en humidité d'environ 70 % à environ 85 % en poids.

17. Procédé pour produire un produit alimentaire en boîte pour animaux familiers, le procédé comprenant les étapes consistant à :
remplir une boîte de conserve en y introduisant une phase extérieure comprenant une source comestible de glucide et de protéine, la phase extérieure ayant une viscosité dans l'intervalle d'environ 1500 à environ 3500 centipoises ;
former un trou dans la phase extérieure pour obtenir une phase extérieure tubulaire ;
remplir le trou de la phase extérieure tubulaire en y introduisant une phase intérieure comprenant une source comestible de glucide et de protéine, la phase intérieure ayant un aspect différent de la phase extérieure ;
sceller la boîte ; et
autoclaver la boîte scellée.

18. Procédé selon la revendication 17, dans lequel la phase intérieure a une viscosité d'environ 1500 cp à environ 3500 cp lorsqu'elle est introduite dans la boîte.
